# EUROPÄISCHE PATENTSCHRIFT

(11) **EP 2 105 539 B1**
(45) Veröffentlichungstag und Bekanntmachung des Hinweises auf die Patenterteilung: **25.06.2014**
(21) Anmeldenummer: 08405115.0
(22) Anmeldetag: 23.04.2008
(51) Int. Cl.: E03B 7/07, E03C 1/02, E03D 3/00, E03D 1/32

(54) **Spülventilanordnung und Spüleinrichtung mit einer solchen Spülventilanordnung**
Flush valve device and spooling device with such a flush valve device
Agencement de soupape de chasse d'eau et dispositif de rinçage doté d'un tel agencement de soupape de chasse d'eau

(30) Priorität: 26.03.2008 EP 08405088
(43) Veröffentlichungstag der Anmeldung: 30.09.2009
(73) Patentinhaber: Geberit International AG, 8645 Jona (CH)
(72) Erfinder: Roest, Maarten, 8645 Jona (CH)
(74) Vertreter: Frischknecht, Harry Ralph

(56) Entgegenhaltungen:
- EP-A2- 0 811 729

## Beschreibung

Die Erfindung betrifft eine Spülventilanordnung mit einem Wasserkanal, der in einem ersten Gehäuseteil und in einem zweiten Gehäuseteil verläuft, mit einer Verbindung zwischen den beiden Gehäuseteilen, einem Absperrventil im ersten Gehäuseteil und einem steuerbaren Ventil im zweiten Gehäuseteil.

Eine Spülventilanordnung dieser Art ist im Stand der Technik durch die EP-A-0 811 729 bekannt geworden. Diese ist für eine Spülvorrichtung, beispielsweise für ein Urinal vorgesehen. Das Absperrventil dient gleichzeitig zum Regulieren des Wasserdurchflusses im Wasserkanal. Das steuerbare Ventil kann zur Spülauslösung beispielsweise pneumatisch oder elektromagnetisch betätigt werden. Es ist in einem Gehäuseteil gelagert, der mit einer Renkverbindung mit einem zweiten Gehäuseteil verbunden ist. Bei geschlossenem Absperrventil kann der Gehäuseteil des steuerbaren Ventils vom anderen Gehäuseteil gelöst werden. Dies ermöglicht eine einfache Revision des steuerbaren Ventils. Wird das Absperrventil versehentlich vor dem Abnehmen des steuerbaren Ventils nicht geschlossen, so können erhebliche Wasserschäden entstehen.

Der Erfindung liegt die Aufgabe zugrunde, eine Spülventilanordnung der genannten Art zu schaffen, die sicherer ist und dennoch ein einfaches Ausbauen des steuerbaren Ventils ermöglicht.

Die Aufgabe ist bei einer gattungsgemässen Spülventilanordnung dadurch gelöst, dass die Verbindung mit einem Sperrorgan gesichert ist, das mit dem Absperrventil so zusammenarbeitet, dass die Verbindung bei geöffnetem Absperrventil unlösbar und bei geschlossenem Absperrventil lösbar ist. Bei der erfindungsgemässen Spülventilanordnung kann der zweite Gehäuseteil und damit das in diesem gelagerte steuerbare Ventil nur dann ausgebaut werden, wenn das Absperrventil geschlossen ist. Das Absperrventil muss somit zuerst geschlossen werden, damit der zweite Gehäuseteil ausgebaut werden kann. Die Kopplung der Ausbaumöglichkeit auf die Stellung des Absperrventils ermöglicht eine sichere Vermeidung von Wasserschäden bei einer Revision des steuerbaren Ventils.

Nach einer Weiterbildung der Erfindung ist vorgesehen, dass das Sperrorgan ein Verriegelungselement aufweist, das die beiden Gehäuseteile bei geöffnetem Absperrventil miteinander verriegelt. Ein solches Verriegelungselement ermöglicht eine einfache und dennoch sichere Verbindung der beiden Gehäuseteile miteinander. Das Verriegelungselement ist vorzugsweise so ausgebildet, dass es bei geschlossenem Absperrventil aus den beiden Gehäuseteilen herausgezogen werden kann.

Das Verriegelungselement ist gemäss einer Weiterbildung der Erfindung als Bügel mit wenigstens einem und vorzugsweise zwei Stiften ausgebildet. Ein solcher Bügel kann einfach hergestellt werden, ermöglicht aber dennoch eine sichere Verbindung. Der Bügel besitzt vorzugsweise zwei Stifte, die jeweils in eine Öffnung des ersten Gehäuseteils eingeschoben sind und die jeweils in eine Nut des zweiten Gehäuseteils eingreifen. Die Verbindung ist hierbei vorzugsweise eine Steckverbindung. Bei herausgezogenem Bügel kann die Steckverbindung gelöst werden.

Nach einer Weiterbildung der Erfindung ist vorgesehen, dass das Sperrorgan ein Sperrelement aufweist, das bei geöffnetem Absperrventil von diesem in einer sperrenden Position gehalten ist und dass bei geschlossenem Absperrventil in eine freigebende Position bewegbar ist. Das Sperrorgan besitzt somit ein Verriegelungselement und ein Sperrelement. Das Sperrorgan ist somit zweiteilig ausgebildet. Grundsätzlich ist jedoch auch eine Ausführung denkbar, nach welcher das Sperrorgan einteilig ist.

Das Sperrelement ist gemäss einer Weiterbildung der Erfindung bei geöffnetem Absperrventil durch einen Eingriff des Verschlusskörpers des Absperrventils fixiert. Vorzugsweise besitzt das Sperrelement hierzu einen Durchgang, in welchen der Verschlusskörper des Absperrventils bei geöffnetem Absperrventil eingreift. Das Sperrelement wird dadurch fixiert, beispielsweise kann es nicht verschwenkt werden. Ist das Sperrelement gemäss einer Weiterbildung der Erfindung eine schwenkbare Scheibe, so ermöglicht dies eine besonders einfache Konstruktion und zudem eine einfache Bedienung. Bei geschlossenem Absperrventil muss dann lediglich noch diese schwenkbare Scheibe verschwenkt werden. Das Verriegelungselement ist dann frei und kann entfernt werden.

Die genannte Verbindung ist gemäss einer Weiterbildung der Erfindung so ausgebildet, dass sie eine vollständige Trennung des Wasserkanals ermöglicht. Dies hat den besonderen Vorteil, dass ein Filter in den zweiten Gehäuseteil eingebaut und entsprechend sicher ausgewechselt werden kann. Der Filter ist vorzugsweise von oben in den Wasserkanal des zweiten Gehäuseteils eingesetzt. Das steuerbare Ventil ist stromabwärts nach dem Filter angeordnet. Bei ausgebautem zweiten Gehäuseteil kann der Filter einfach ausgebaut und gereinigt oder ersetzt werden.

Die erfindungsgemässe Spülventilanordnung eignet sich insbesondere aber nicht ausschliesslich für eine Spüleinrichtung. Die Betätigung des steuerbaren Ventils erfolgt beispielsweise pneumatisch oder elektromagnetisch, es sind aber auch andere Betätigungen denkbar. Beispielsweise ist auch eine mechanische Betätigung möglich.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: ein Schnitt durch eine erfindungsgemässe Spülventilanordnung entlang der Linie I-I der Figur 2,
- Figur 2: ein Schnitt durch die erfindungsgemässe Spülventilanordnung entlang der Linie II-II der Figur 1,
- Figur 3: eine räumliche Ansicht des ersten Gehäuseteils,
- Figur 4: eine weitere Ansicht des ersten Gehäuseteils,
- Figur 5: ein Schnitt entlang der Linie V-V der Figur 4 und
- Figur 6: ein Schnitt entlang der Linie VI-VI der Figur 4.

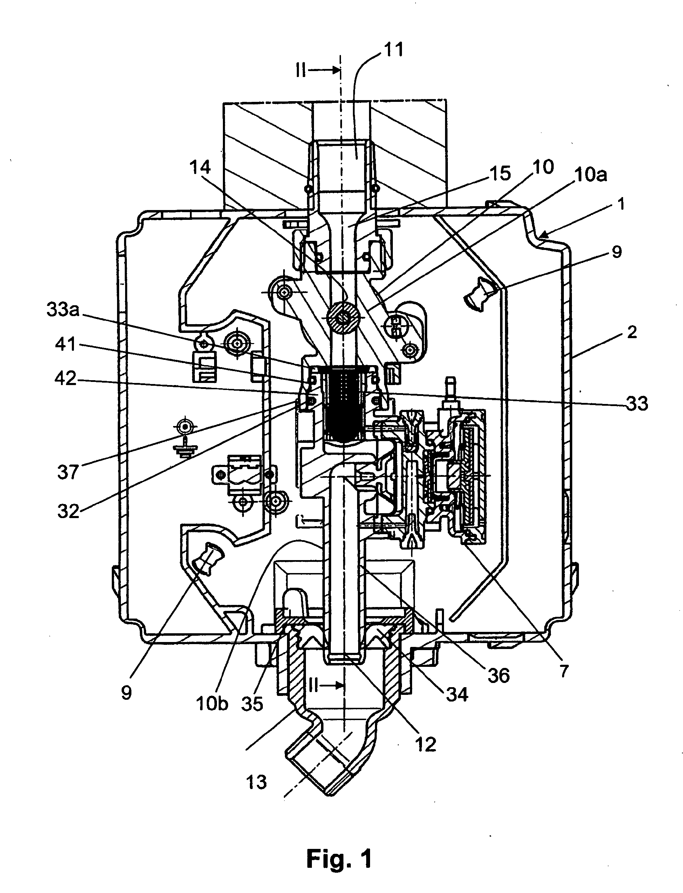

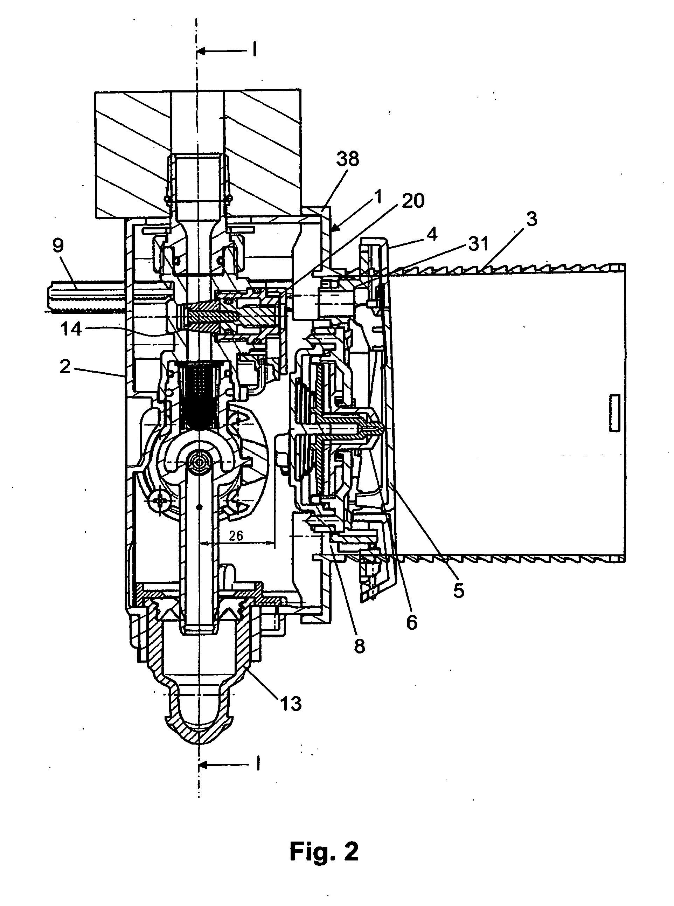

Die Spülventilanordnung 1 besitzt gemäss den Figuren 1 und 2 einen Kasten 2, in dem ein Gehäuse 10 mit einem ersten Gehäuseteil 10a und einem zweiten Gehäuseteil 10b gelagert ist. Innerhalb des Gehäuses 10 verläuft ein Wasserkanal 15 von einem Eingang 11 zu einem Ausgang 12. Der Eingang 11 wird an eine hier nicht gezeigte Druckwasserleitung angeschlossen. Der Ausgang 12 mündet in einen Abgangsstutzen 13, der an ein hier nicht gezeigtes Spülrohr, beispielsweise eines Urinals angeschlossen ist. Im ersten Gehäuseteil 10a ist ein Absperrventil 14 und im zweiten Gehäuseteil 10b ein steuerbares Ventil 7 gelagert. Das Absperrventil 14 ist vorzugsweise gleichzeitig auch ein Regulierventil. Das Ventil 7 ist vorzugsweise ein Spülventil, beispielsweise ein Servo gesteuertes Membranventil. Solche Ventile sind an sich bekannt.

Der Kasten 2 ist in an sich bekannter Weise mit Bolzen 9, beispielsweise an einem hier nicht gezeigten Gestell lösbar befestigt. Er besitzt gemäss Figur 2 eine Revisionsöffnung 8, auf die ein Deckel 38 aufgesetzt ist. In den Deckel 38 ist eine Lagerplatte 31 gesetzt, in der ein pneumatisches Auslöseorgan 6 gelagert ist. Die Betätigung des Auslösorgans 6 erfolgt mit einer Taste 5, die in einer Betätigungsplatte 4 gelagert ist. Wird die Taste 5 verschwenkt, so wird über das Betätigungsorgan 6 das Ventil 7 geöffnet. Bei geöffnetem Absperrventil 14 wird dadurch eine Spülung ausgelöst. In der Figur 2 ist noch ein Bauschutz 3 gezeigt, der im montierten Zustand entsprechend abgelängt ist.

Der erste Gehäuseteil 10a und der zweite Gehäuseteil 10b sind mit einer Verbindung 37 verbunden, die eine Steckverbindung ist und Dichtungsmittel 32 aufweist, die eine flüssigkeitsdichte Verbindung zwischen den beiden Gehäuseteile ermöglicht. Wie ersichtlich ist der zweite Gehäuseteil 10b in den ersten Gehäuseteil 10a eingesetzt. Durch die Verbindung 37 wird ein Filter 33 fixiert, der von oben in den Wasserkanal 15 des zweiten Gehäuseteils 10b eingesetzt ist. Ein Flansch 33a des Filters 33 wird durch die beiden Gehäuseteile 10a und 10b festgeklemmt. Der Filter 33 ist insbesondere als Sieb ausgebildet. Er verhindert, dass feste Teile zum Ventil 7 gelangen und dieses verstopfen können.

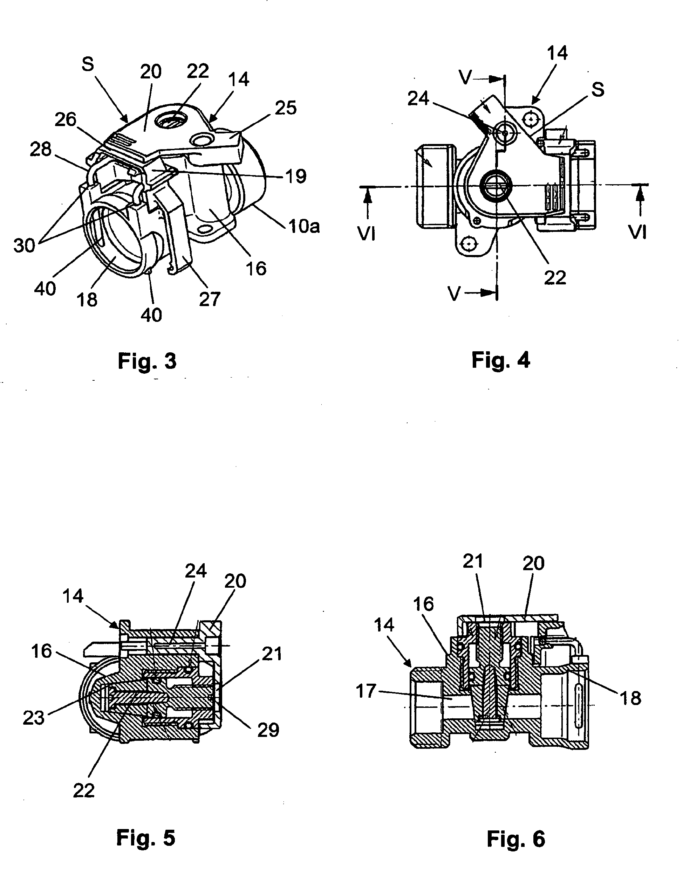

Das Absperrventil 14 besitzt gemäss den Figuren 3 bis 6 ein Ventilgehäuse 16, in dem ein Verschlusskörper 22 gelagert ist. Dieser Verschlusskörper 22 kann an einem Kopf 29, beispielsweise mit einem hier nicht gezeigten Schraubendreher um seine Längsachse gedreht und damit bezüglich eines Ventilsitzes 23 in seiner Längsrichtung verstellt werden. Die Figuren 5 und 6 zeigen den Verschlusskörper 22 bei geschlossenem Absperrventil 14. Wird der Verschlusskörper 22 gedreht, so wird das Absperrventil 14 geöffnet. Der Durchfluss durch einen Durchgang 17 (Fig. 6) des Absperrventils 14 kann dadurch geregelt werden.

Auf das Gehäuse 16 ist ein Sperrelement 20 aufgesetzt, das an einem Griff 25 um eine Schwenkachse 24 verschwenkbar ist. Im Abstand zur Schwenkachse 24 besitzt das Sperrelement 20 eine Öffnung 21, durch welche der Kopf 29 des Verschlusskörpers 22 zugänglich ist. Durch die Öffnung 21 hindurch kann somit der Verschlusskörper 22 betätigt werden. Ist der Verschlusskörper 22 vollständig in das Gehäuse 16 eingedreht und somit das Absperrventil 14 geschlossen, so greift der Kopf 29 nicht in die Öffnung 21 ein. Das Sperrelement 20 kann dann somit wie oben erwähnt verschwenkt werden. Ist das Absperrventil 14 hingegen auch nur wenig geöffnet, so ragt der Kopf 29 in die Öffnung 21 hinein und dadurch kann das Sperrelement 20 aus der in den Figuren 3 bis 6 gezeigten Stellung nicht verschwenkt werden.

In der in den Figuren 3 bis 6 gezeigten Stellung übergreift das Sperrelement 20 mit einem Eingriffsbereich 26 einen Halter 19 eines Verriegelungselements 27. An dem Halter 19 ist ein Bügel 28 befestigt, der beispielsweise aus einem Draht geformt sein kann und der zwei Stifte 40 besitzt, die jeweils in eine Öffnung 30 des Gehäuses 16 eingreifen. Die Stifte 40 befinden sich bereichsweise innerhalb einer Anschlussöffnung 18 des Gehäuses 16, in welche ein Verbindungsteil 42 des zweiten Gehäuseteils 10b eingreift. Dieser Verbindungsteil 42 besitzt gemäss der Figur 1 eine äussere Nut 41, in welche die Stifte 40 eingreifen und damit das erste Gehäuseteil 10a mit dem zweiten Gehäuseteil 10b verriegeln.

Durch Verschwenken des Sperrelements 20 aus der in den Figuren 3 bis 6 gezeigten Stellung, kann die Überdeckung des Halters 19 aufgehoben werden. Der Halter 19 kann dann mit dem Bügel 28 vom ersten Gehäuseteil 10a abgenommen werden. Die Stifte 40 befinden sich dann somit nicht mehr in der Anschlussöffnung 18 und entsprechend ist die Verbindung 37 entriegelt. Dies ist aber nur möglich, wenn der Verschlusskörper 22 vollständig in das Gehäuse 16 eingedreht und somit das Absperrventil 14 geschlossen ist. Das Sperrelement 20 und das Verriegelungselement 27 bilden somit ein Sperrorgan S, das verhindert, dass die Verbindung 37 bei geöffnetem Absperrventil 14 getrennt werden kann.

Nachfolgend wird der Vorgang bei einer Revision näher erläutert.

Bei einer Revision werden die Betätigungsplatte 4 sowie der Deckel 38 mit der Lagerplatte 31 vom Kasten 2 abgenommen. Das Absperrventil 14 wird nun geschlossen, indem mit einem Schraubendreher durch die Öffnung 21 hindurch der Verschlusskörper 22 eingeschraubt wird. Das Sperrelement 20 wird nun am Griff 25 um die Schwenkachse 24 verschwenkt, so dass sich der Eingriffsbereich 26 vom Halter 19 entfernt und dieser damit frei wird. Am Halter 19 wird nun der Bügel 28 aus dem ersten Gehäuseteil 10a herausgezogen. Der zweite Gehäuseteil 10b kann nun von Hand nach unten geschoben werden, so dass die Verbindung 37 getrennt wird. Hierbei wird ein Rohr 36 des zweiten Gehäuseteils 10b in ein Dichtungsmittel 34 verschoben. Dieses Dichtungsmittel 34 kann durch Lösen eines Befestigungsteils 35 gelöst werden. Das Befestigungsteil 35 ist beispielsweise mit einer Bajonettverbindung mit dem Abgangsstutzen 13 verbunden. Der zweite Gehäuseteil 10b kann nun mit dem Ventil 7 und dem Dichtungsmittel 34 durch die Öffnung 39 ausgebaut werden. Der Filter 33 befindet sich im ausgebauten zweiten Gehäuseteil 10b und kann damit einfach gereinigt oder ausgetauscht werden. Nach den erforderlichen Revisionsarbeiten wird der zweite Gehäuseteil 10b mit dem Ventil 7 und dem Filter 33 sowie gegebenenfalls einer ersetzen Dichtung 34 wieder eingesetzt. Das zweite Gehäuseteil 10b wird nach oben geschoben und damit der Verbindungsteil 42 in die Anschlussöffnung 18 hinein geschoben. Nun wird das Verriegelungselement 27 aufgesetzt, so dass wie oben erläutert die Stifte 40 die Verbindung 37 verriegeln. Nun wird das Sperrelement 20 in die in den Figuren 3 bis 6 gezeigte Stellung verschwenkt. Der Verschlusskörper 22 wird nun gedreht, bis der gewünschte Durchfluss eingestellt ist. Das Sperrelement 20 ist nun wie oben erläutert durch den Kopf 29 des Verschlusskörpers fixiert. Anschliessend werden der Deckel 38, die Lagerplatte 31 und die Betätigungsplatte 4 in bekannter Weise wieder montiert. Ist das Sperrelement 20 verschwenkt, so ist der Verschlusskörper 22 überdeckt und das Absperrventil 14 kann nicht ungewollt geöffnet werden, bevor der zweite Gehäuseteil 10b wieder eingesetzt ist. Das Sperrelement 20 ist bei herausgezogenem Bügel blockiert. Der Halter 19 wird bei der herausgezogenen Stellung mit dem Verriegelungselement 27 gehalten.

### Bezugszeichenliste

- 1: Spülventilanordnung
- 2: Kasten
- 3: Bauschutz
- 4: Betätigungsplatte
- 5: Taste
- 6: Auslöseorgan
- 7: Ventil
- 8: Revisionsöffnung
- 9: Befestigungsbolzen
- 10: Gehäuse
- 10a: erster Gehäuseteil
- 10b: zweiter Gehäuseteil
- 11: Eingang
- 12: Ausgang
- 13: Abgangsstutzen
- 14: Absperrventil
- 15: Wasserkanal
- 16: Ventilgehäuse
- 17: Durchgang
- 18: Anschlussöffnung
- 19: Halter
- 20: Sperrelement
- 21: Öffnung
- 22: Verschlusskörper
- 23: Ventilsitz
- 24: Schwenkachse
- 25: Griff
- 26: Eingriffsbereich
- 27: Verriegelungselement
- 28: Bügel
- 29: Kopf
- 30: Öffnung
- 31: Lagerplatte
- 32: Dichtungsmittel
- 33: Filter
- 33a: Flansch
- 34: Dichtungsmittel
- 35: Befestigungsteil
- 36: Rohr
- 37: Verbindung
- 38: Deckel
- 40: Stift
- 41: Nut
- 42: Verbindungsteil
- S: Sperrorgan

## Patentansprüche

1. Spülventilanordnung mit einem Wasserkanal, der in einem ersten Gehäuseteil (10a) und in einem zweiten Gehäuseteil (10b) verläuft, mit einer Verbindung (37) zwischen den beiden Gehäuseteilen (10a, 10b) einem Absperrventil (14) im ersten Gehäuseteil (10a) und einem steuerbaren Ventil (7) im zweiten Gehäuseteil (10b), **dadurch gekennzeichnet, dass** die Verbindung (37) mit einem Sperrorgan (S) gesichert ist, das mit dem Absperrventil (14) so zusammenarbeitet, dass die Verbindung (37) bei geöffnetem Absperrventil (14) unlösbar und bei geschlossenem Absperrventil (14) lösbar ist.

2. Spülventilanordnung nach Anspruch 1, **dadurch gekennzeichnet, dass** das Sperrorgan (S) ein Verriegelungselement (27) aufweist, das die beiden Gehäuseteile (10a, 10b) bei geöffnetem Absperrventil (14) miteinander verriegelt.

3. Spülventilanordnung nach Anspruch 2. **dadurch gekennzeichnet, dass** das Verriegelungselement (27) wenigstens ein Verriegelungsteil (28) aufweist, das in die beiden Gehäuseteile (10a, 10b) eingreift und diese dadurch verbindet.

4. Spülventilanordnung nach Anspruch 3, **dadurch gekennzeichnet, dass** das Verriegelungsteil (28) ein Bügel mit wenigstens einem und vorzugsweise zwei Stiften (40) ist.

5. Spülventilanordnung nach einem der Anspruche 1 bis 4, **dadurch gekennzeichnet, dass** die Verbindung (37) zwischen den beiden Gehäuseteilen (10a, 10b) eine Steckverbindung ist.

6. Spülventilanordnung nach einem der Ansprüche 1 bis 5, **dadurch gekennzeichnet, dass** das Sperrorgan (S) ein Sperrelement (20) aufweist, das bei geöffnetem Absperrventil (14) von diesem in einer sperrenden Position gehalten ist und das bei geschlossenem Absperrventil (14) in eine freigebende Position bewegbar ist.

7. Spülventilanordnung nach Anspruch 6, **dadurch gekennzeichnet, dass** das Sperrelement (20) bei geöffnetem Absperrventil (14) durch einen Eingriff des Verschlusskörpers (22) des Absperrventils (14) fixiert ist.

8. Spülventilanordnung nach Anspruch 7, **dadurch gekennzeichnet, dass** das Sperrelement (20) einen Durchgang (17) aufweist, in den bei geöffnetem Absperrventil (14) der Verschlusskörper (22) eingereift und dadurch das Sperrteil fixiert.

9. Spülventilanordnung nach einem der Ansprüche 6 bis 8, **dadurch gekennzeichnet, dass** das Sperrelement (20) eine schwenkbare Scheibe ist.

10. Spülventilanordnung nach einem der Ansprüche 6 bis 9, **dadurch gekennzeichnet, dass** das Sperrelement (20) das Verriegelungselement (27) bei geöffnetem Absperrventil (14) sperrt und dass bei geschlossenem Absperrventil das Sperrelement in eine Position bewegbar ist, in welcher das Verriegelungselement (27) zum Entriegeln der Verbindung (37) bewegbar ist.

11. Spülventilanordnung nach einem der Ansprüche 1 bis 10, **dadurch gekennzeichnet, dass** das steuerbare Ventil (7) ein Spülventil ist.

12. Spülventilanordnung nach einem der Ansprüche 1 bis 11, **dadurch gekennzeichnet, dass** das erste Gehäuseteil (10a) fiir das Wasser einen Eingang (11) und das zweite Gehäuseteil (10b) einen Ausgang (12) aufweist.

13. Spüleinrichtung mit einer Spülventilanordnung (1) nach einem der Ansprüche 1 bis 12, **dadurch gekennzeichnet, dass** sie eine Betätigungsvorrichtung (4) aufweist, mit welcher das steuerbare Ventil (7) betätigbar ist.

14. Spüleinrichtung nach Anspruch 13, dass die Betätigungsvorrichtung eine Betätigungsplatte (4) aufweist und dass die Spülventilanordnung (1) hinter dieser Betätigungsplatte angeordnet ist.

15. Spüleinrichtung nach Anspruch 13 oder 14, **dadurch gekennzeichnet, dass** sie für ein Urinal vorgesehen ist.

## Claims

1. Flushing valve arrangement with a water channel which runs in a first housing part (10a) and in a second housing part (10b) having a connection (37) between the two housing parts (10a, 10b), a shut-off valve (14) in the first housing part (10a) and a controllable valve (7) in the second housing part (10b), **characterized in that** the connection (37) is secured with a blocking device (S) which works with the shut-off valve (14) in such a manner that the connection (37) is non-detachable when the shut-off valve (14) is open and detachable when the shut-off valve (14) is closed.

2. Flushing valve arrangement according to Claim 1, **characterized in that** the blocking device (S) has a locking element (27) which locks the two housing parts (10a, 10b) to one another when the shut-off valve (14) is open.

3. Flushing valve arrangement according to Claim 2, **characterized in that** the locking element (27) has at least one locking part (28) which engages with both housing parts (10a, 10b) and thereby connects them.

4. Flushing valve arrangement according to Claim 3, **characterized in that** the locking part (28) is a bracket with at least one and preferably two pins (40).

5. Flushing valve arrangement according to one of the Claims 1 to 4, **characterized in that** the connection (37) between the two housing parts (10a, 10b) is a plug-in connection.

6. Flushing valve arrangement according to one of the Claims 1 to 5, **characterized in that** the blocking device (S) has a blocking element (20) which, when the shut-off valve (14) is open, is held by the latter in a blocking position and which can be moved into a releasing position when the shut-off valve (14) is closed.

7. Flushing valve arrangement according to Claim 6, **characterized in that** the blocking element (20) is fixed when the shut-off valve (14) is open through engagement of the closing body (22) of the shut-off valve (14).

8. Flushing valve arrangement according to Claim 7, **characterized in that** the blocking element (20) has a passage (17) with which the closing body (22) engages when the shut-off valve (14) is open and thereby fixes the blocking part.

9. Flushing valve arrangement according to one of the Claims 6 to 8, **characterized in that** the blocking element (20) is a pivotable plate.

10. Flushing valve arrangement according to one of the Claims 6 to 9, **characterized in that** the blocking element (20) blocks the locking element (27) when the shut-off valve (14) is open and that the blocking element can be moved into a position in which the locking element (27) can be moved to unlock the connection (37) when the shut-off valve is closed.

11. Flushing valve arrangement according to one of the Claims 1 to 10, **characterized in that** the controllable valve (7) is a flushing valve.

12. Flushing valve arrangement according to one of the Claims 1 to 11, **characterized in that** the first housing part (10a) has an inlet (11) for the water and the second housing part (10b) has an outlet (12).

13. Flushing device having a flushing valve arrangement (1) according to one of the Claims 1 to 12, **characterized in that** it has an actuator device (4) with which the controllable valve (7) can be actuated.

14. Flushing device according to Claim 13, that the actuator device has an actuator plate (4) and that the flushing valve arrangement (1) is arranged downstream of this actuator plate.

15. Flushing device according to Claim 13 or 14, **characterized in that** it is provided for a urinal.

## Revendications

1. Agencement de soupape de chasse d'eau comprenant une canalisation d'eau qui s'étend dans une première partie de boîtier (10a) et dans une deuxième partie de boîtier (10b), comprenant une connexion (37) entre les deux parties de boîtier (10a, 10b), une soupape d'arrêt (14) dans la première partie de boîtier (10a) et une soupape commandable (7) dans la deuxième partie de boîtier (10b), **caractérisé en ce que** la connexion (37) est serrée par un organe d'arrêt (S) qui coopère avec la soupape d'arrêt (14) de telle sorte que la connexion (37) ne puisse pas être desserrée lorsque la soupape d'arrêt est ouverte (14) et puisse être desserrée lorsque la soupape d'arrêt (14) est fermée.

2. Agencement de soupape de chasse d'eau selon la revendication 1, **caractérisé en ce que** l'organe d'arrêt (S) présente un élément de verrouillage (27) qui verrouille les deux parties de boîtier (10a, 10b) ensemble lorsque la soupape d'arrêt (14) est ouverte.

3. Agencement de soupape de chasse d'eau selon la revendication 2, **caractérisé en ce que** l'élément de verrouillage (27) présente au moins une partie de verrouillage (28) qui vient en prise dans les deux parties de boîtier (10a, 10b) et qui relie ainsi celles-ci.

4. Agencement de soupape de chasse d'eau selon la revendication 3, **caractérisé en ce que** la partie de verrouillage (28) est un étrier ayant au moins une goupille et de préférence deux goupilles (40).

5. Agencement de soupape de chasse d'eau selon l'une quelconque des revendications 1 à 4, **caractérisé en ce que** la connexion (37) entre les deux parties de boîtier (10a, 10b) est une connexion enfichable.

6. Agencement de soupape de chasse d'eau selon l'une quelconque des revendications 1 à 5, **caractérisé en ce que** l'organe d'arrêt (S) présente un élément d'arrêt (20) qui, lorsque la soupape d'arrêt (14) est ouverte, est maintenu par celle-ci dans une position de blocage et qui, lorsque la soupape d'arrêt (14) est fermée, peut être déplacé dans une position de libération.

7. Agencement de soupape de chasse d'eau selon la revendication 6, **caractérisé en ce que** l'élément d'arrêt (20), lorsque la soupape d'arrêt (14) est ouverte, est fixé par engagement du corps de fermeture (22) de la soupape d'arrêt (14).

8. Agencement de soupape de chasse d'eau selon la revendication 7, **caractérisé en ce que** l'élément d'arrêt (20) présente un passage (17) dans lequel, lorsque la soupape d'arrêt (14) est ouverte, s'engage le corps de fermeture (22), qui fixe ainsi la partie d'arrêt.

9. Agencement de soupape de chasse d'eau selon l'une quelconque des revendications 6 à 8, **caractérisé en ce que** l'élément d'arrêt (20) est un disque pivotant.

10. Agencement de soupape de chasse d'eau selon l'une quelconque des revendications 6 à 9, **caractérisé en ce que** l'élément d'arrêt (20) bloque l'élément de verrouillage (27) lorsque la soupape d'arrêt (14) est ouverte et **en ce que**, lorsque la soupape d'arrêt est fermée, l'élément d'arrêt peut être déplacé dans une position dans laquelle l'élément de verrouillage (27) peut être déplacé pour déverrouiller la connexion (37).

11. Agencement de soupape de chasse d'eau selon l'une quelconque des revendications 1 à 10, **caractérisé en ce que** la soupape commandable (7) est une soupape de chasse d'eau.

12. Agencement de soupape de chasse d'eau selon l'une quelconque des revendications 1 à 11, **caractérisé en ce que** la première partie de boîtier (10a) pour l'eau présente une entrée (11) et la deuxième partie de boîtier (10b) présente une sortie (12).

13. Dispositif de chasse d'eau comprenant un agencement de soupape de chasse d'eau (1) selon l'une quelconque des revendications 1 à 12, **caractérisé en ce qu'**il présente un dispositif d'actionnement (4) avec lequel la soupape commandable (7) peut être actionnée.

14. Dispositif de chasse d'eau selon la revendication 13, **caractérisé en ce que** le dispositif d'actionnement présente une plaque d'actionnement (4) et **en ce que** l'agencement de soupape de chasse d'eau (1) est disposé derrière cette plaque d'actionnement.

15. Dispositif de chasse d'eau selon la revendication 13 ou 14, **caractérisé en ce qu'**il est prévu pour un urinal.
